Europäisches Patentamt

European Patent Office

Office européen des brevets

(11) Veröffentlichungsnummer: **0 350 729**
**A2**

# (12) EUROPÄISCHE PATENTANMELDUNG

(21) Anmeldenummer: 89111934.9

(22) Anmeldetag: 30.06.89

(51) Int. Cl.⁴: **B65G 47/14**

(30) Priorität: 13.07.88 DE 3823701

(43) Veröffentlichungstag der Anmeldung:
17.01.90 Patentblatt 90/03

(84) Benannte Vertragsstaaten:
AT BE CH DE ES FR GB IT LI LU NL SE

(71) Anmelder: Knöll, Herbert
Alter Weg 15
D-7152 Aspach 2(DE)

(72) Erfinder: Knöll, Herbert
Alter Weg 15
D-7152 Aspach 2(DE)

(74) Vertreter: Patentanwälte RUFF, BEIER und
SCHÖNDORF
Neckarstrasse 50
D-7000 Stuttgart 1(DE)

(54) Vorrichtung zum Sortieren und Bereitstellen von Einzelteilen.

(57) Eine Vorrichung zum Sortieren und Bereitstellen von Einzelteilen enthält einen zentral angeordneten Vorratsbunker mit einem anhebbaren Boden (13). Zum Anheben des Bodens (13) sind an dessen Unterseite zwei Gewindespindeln (20) drehfest befestigt. Jede Gewindespindel (20) greift in eine mit einem Innengewinde und einem Außengewinde umgekehrten Richtungssinn versehene Gewindehülse (23) ein. Jede Gewindehülse (23) greift in ein ortsfest angeordnetes Außengewinde ein. Durch Drehen der Gewindehülse erfolgt eine teleskopische Verschiebung der Gewindespindel.

FIG. 1

Vorrichtung zum Sortieren und Bereitstellen von Einzelteilen

Die Erfindung betrifft eine Vorrichtung zum Sortieren und Bereitstellen von Einzelteilen, mit einem zentral angeordneten Vorratsbunker zur Aufnahme der zu sortierenden Teile, dessen Boden durch einen ggf. elektrischen Antrieb anhebbar ist.

Geräte dieser Art dienen dazu, aus einem unsortierten Vorrat an Einzelteilen kontinuierlich Einzelteile zu entnehmen und dann beispielsweise in einer bestimmten Ausrichtung oder einem bestimmten Abstand einer Weiterverarbeitungs-Einrichtung zuzuführen.

Es ist bereits eine Vorrichtung dieser Art bekannt (DE-OS 33 05 367), bei der der Boden des Vorratsbunkers durch einen nicht näher beschriebenen Antrieb anhebbar ist. Die einzelnen Gegenstände fallen dann über den oberen Rand des Vorratsbunkers in die Sortierschale. Die Menge der von einer derartigen Vorrichtung zu verarbeitenden Gegenstände hängt von dem Volumen des Vorratsbunkers ab. Dabei muß der Boden bis zum oberen Rand des Vorratsbunkers anhebbar sein.

Weiterhin bekannt ist eine Vorrichtung zum Sortieren von Teilen (DE-PS 35 29 862), bei der der Boden des Vorratsbunkers an einer vertikalen Hubspindel anhebbar ist. Die Teile gelangen über den oberen Rand des Vorratsbunkers auf einen diesen umgebenden Ring. Die Hubspindel durchsetzt die gesamte Vorrichtung von unten nach oben und erstreckt sich insbesondere durch das gesamte Innere des Vorratsbunkers. Sie muß von dem Inhalt des Vorratsbunkers durch eine Teleskopeinrichtung abgeschirmt werden. Der Antriebsmotor sitzt unterhalb des Bodens. Der von der Hubspindel und dem Teleskop eingenommene Raum innerhalb des Vorratsbunkers geht verloren. Darüber hinaus muß der Elektromotor mit dem gesamten Antrieb beim Anheben des Bodens mitbewegt werden. Die Teleskoprohre werden von den zu sortierenden Gegenständen ständig berührt.

Der Erfindung liegt die Aufgabe zugrunde, einen möglichst einfach aufgebauten und störunempfindlichen Antrieb für den Boden einer Sortiervorrichtung zu schaffen, der eine große Hublänge bei nieriger Baugröße aufweist.

Zur Lösung dieser Aufgabe ist erfindungsgemäß vorgesehen, daß an der Unterseite des anzuhebenden Bauteils, beispielsweise des Bodens, mindestens eine Gewindespindel drehfest befestigt ist, die in eine mit einem Innengewinde versehene Gewindehülse eingreift, die an ihrer Außenseite ein Gewinde umgekehrter Gewinderichtung aufweist und in ein ortsfest angeordnetes Gewinde eingreift, wobei der Antrieb die Gewindehülse drehantreibt.

Auf diese Weise ist der gesamte Antrieb unterhalb des Bodens des Vorratsbunkers angebracht, so daß der Inhalt des Vorratsbunkers nicht an dem Antrieb angreifen kann und der Raum innerhalb des Vorratsbunkers uneingeschränkt zur Verfügung steht. Der Gesamtantrieb ist unterhalb des Bodens angeordnet. Durch die Verwendung einer in eine Gewindehülse eingeschraubten Gewindespindel wird dafür gesorgt, daß der Hubweg praktisch doppelt so lang ist wie die Baulänge des Antriebs. Der Drehantrieb greift an der äußeren Gewindehülse an und verdreht diese, wobei diese aufgrund ihrer Drehung zum einen sich selbst axial verschiebt und dadurch zum anderen zusätzlich die Gewindespindel nochmals verschiebt. Dadurch ergibt sich eine Addition von zwei Geschwindigkeiten bzw. Wegen.

Der Drehantrieb zwischen dem Motor und der Gewindehülse kann beispielsweise durch ein Zahnrad erfolgen, oder bei mehreren Gewindehülsen durch einen Zahnriemen o.dgl., der um die Zahnräder herumgeführt ist und an denen der Motor angreift. Dabei kann sich beispielsweise der Motor in Längsrichtung mitbewegen.

Insbesondere günstig ist es jedoch, wenn die Gewindehülse über im wesentlichen ihre gesamte Länge mit Längsnuten zur Bildung eines zahnradförmigen Querschnitts versehen ist. In diesem Fall kann ein Antrieb mit einem Zahnrad an jeder beliebigen axialen Stelle der Gewindehülse angreifen, insbesondere also an einer festen Stelle, an der sich die Gewindehülse axial vorbeibewegt.

Insbesondere ist es von Vorteil, wenn der Antriebsmotor mit einem Zahnrad mit der Außenseite der Gewindehülse kämmt.

Das Gewinde, in dem die Gewindehülse eingreift, kann beispielsweise in einer Basisplatte der Vorrichtung gebildet sein. Besonders günstig ist es jedoch, wenn das Gewinde in einer Gewindehülse angeordnet ist, die in eine Grundplatte oder eine Basisplatte der Vorrichtung eingesetzt ist.

Die eigentliche Steuerung der Hubbewegung des Bodens der Sortiervorrichtung kann durch Lichtschranken oder ähnliches ausgelöst werden. Die Erfindung schlägt jedoch vor, daß an den beiden Enden der von dem Antrieb durchgeführten Bewegung eine automatische Endabschaltung erfolgt. Zu diesem Zweck kann vorgesehen sein, daß die Gewindehülse oder ggf. auch die Gewindespindel in ihren beiden Endstellungen einen Endschalter betätigt. Es können zu diesem Zweck auch für jede Endstellung eine eigener Endschalter vorgesehen sein.

Zur besonders guten Ausnutzung des zur Verfügung stehenden Raums kann in Weiterbildung der Erfindung vorgesehen sein, daß die Gewinde an der Außenseite und der Innenseite der Gewindehülse die gleiche Steigung aufweisen.

Es ist möglich, daß der Hubantrieb für den Boden des Vorratsbunkers nur Antriebsfunktionen übernimmt, während die Führung für den Boden von anderen Einrichtungen übernommen wird. Insbesondere günstig ist es jedoch, wenn zwei oder drei gleichmäßig verteilt angeordnete Gewindespindeln und entsprechend viele Gewindehülsen vorgesehen sind. In diesem Fall dient der Antrieb auch gleichzeitig der Führung. Dabei ist es sinnvoll, bei kleineren Geräten zwei Gewindespindeln mit Gewindehülsen zu verwenden, während bei größeren Geräten drei verwendet werden.

Um auch eine entsprechende Untersetzung vorzusehen, kann erfindungsgemäß vorgesehen sein, daß der Antrieb von einem zentralen Ritzel über je ein Zwischenritzel für jede Gewindehülse erfolgt. Der Antrieb kann insbesondere an der Unter seite der Basisplatte angeordnet sein, was den Vorteil hat, daß die einzelnen Zwischenritzel an der Platte gelagert werden. Darüber hinaus braucht der Antrieb nicht mitbewegt zu werden, was die Vorrichtung weiter vereinfacht.

In Weiterbildung der Erfindung kann vorgesehen sein, daß die Gewindehülsen und die Gewindespindeln etwa die gleiche Länge aufweisen.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:

Fig. 1 schematisch die Seitenansicht eines Antriebs zum Anheben des im Schnitt dargestellten Bodens einer Sortiereinrichtung;

Fig. 2 perspektivisch einen Ausschnitt der Außenseite einer Gewindehülse;

Fig. 3 vergrößert einen Teilschnitt durch die Basisplatte der Fig. 1;

Fig. 4 schematisch die gegenseitige Anordnung mehrerer Einzelteile.

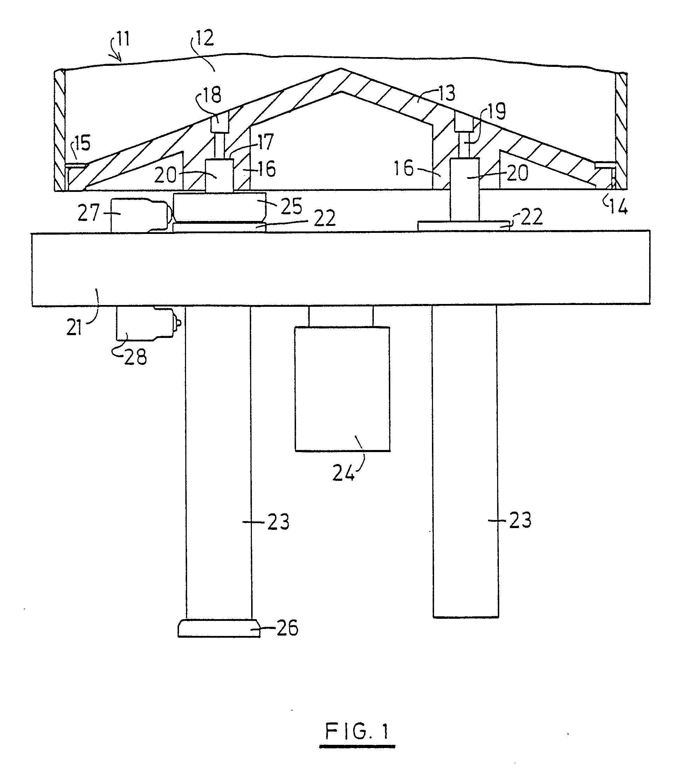

In Fig. 1 ist abgebrochen ein Vorratsbunker 11 für eine Sortiervorrichtung dargestellt. Dieser Vorratsbunker 11 enthält eine zylindrische Außenwand 12, vorzugsweise in der Form eines Kreiszylinders. Diese Außenwand 12 ist an der Unterseite offen. Innerhalb der zylindrischen Außenwand 12 ist ein Boden 13 des Vorratsbunkers 11 eingesetzt, der dessen Innenraum nach unten abgrenzt. Der Boden 13 ist mit Hilfe der noch zu beschreibenden Einrichtung anhebbar ausgebildet. Er enthält also keine Verbindung mit der Außenwand 12 des Vorratsbunkers 11.

Die Oberseite des Bodens 13 weist die Form eines flachen Kegels auf, dessen Spitze in der Mitte liegt. Dadurch gelangen Gegenstände, die im Innern des Vorratsbunkers 11 liegen, nach außen. Der Außenrand 14 des Bodens 13 des Vorratsbunkers 11 enthält überall einen gewissen Abstand von der Außenwand 12, wobei dieser Abstand durch eine Ringschürze 15 abgedeckt sein kann.

An der Unterseite ist der Boden 13 des Vorratsbunkers 11 mit zwei axial verlaufenden Ansätzen 16 versehen, die an ihrer Unterseite jeweils eine Sacklochbohrung 17 aufweisen. Von der Oberseite her ist in Ausrichtung der Sacklöcher 17 jeweils ein weiteres Sackloch 18 in den Boden 13 eingebracht. Beide Sacklöcher 17, 18 stehen durch ein Durchgangsloch 19 miteinander in Verbindung. In die Sacklöcher 17 der Ansätze 16 ist jeweils das obere Ende einer Gewindespindel 20 eingesetzt. Diese Gewindespindeln 20 sind von den oberen Sacklöchern 18 her mit Hilfe einer nicht dargestellten Schraube festgeschraubt. Die Gewindespindeln sind also drehfest mit dem Boden 13 des Vorratsbunkers 11 verbunden und verlaufen parallel zu dessen Längsachse.

Die Vorrichtung, die den Vorratsbunker 11 enthält, weist eine an einem Maschinengestell o.dgl. befestigte Basisplatte 21 auf. Die Basisplatte 21 weist bei der dargestellten Ausführungsform zwei durchgehende in Fig. 1 nicht sichtbare Öffnungen auf, in die jeweils eine Gewindebuchse 22 eingesetzt ist. Jede Gewindebuchse 22 weist in ihrem Inneren ein Linksgewinde auf. In die Gewindebuchsen 22 ist je eine Gewindehülse 23 eingeschraubt, die demzufolge ebenfalls mit einem Linksgewinde versehen ist. Diese Gewindehülsen 23 enthalten in der Wand ihrer inneren Durchgangsbohrung ebenfalls ein Gewinde, und zwar ein dem Außengewinde der Gewindespindeln 20 entsprechendes Rechtsgewinde. Daher sind die Gewindespindeln 20 in die Gewindehülsen 23 und diese in die Gewindebuchsen 22 eingeschraubt.

An der Unterseite der Basisplatte 21 ist ein Elektromotor 24 befestigt, der über eine Getriebeverbindung mit der Außenseite der Gewindehülsen 23 in Wirkverbindung steht.

Die in Fig. 1 linke Gewindehülse 23 enthält im Bereich ihres oberen Endes einen Kragen 25 und im Bereich ihres unteren Endes einen weiteren Kragen 26. Der obere Kragen 25 wirkt mit einem elektrischen Schalter 27 zusammen, der an der Oberseite der Basisplatte 21 befestigt und derart angeordnet ist, daß sein Schaltknopf von dem Kragen 25 dann berührt wird, wenn der Antrieb in der in der Fig. 1 dargestellten unteren Endstellung ist.

An der Unterseite der Basisplatte 21 ist ein zweiter Schalter 28 befestigt, und zwar ebenfalls im Bereich der Gewindespindel 23. Er ist so angeordnet, daß sein Schaltknopf dann von dem unteren Kragen 26 der Gewindespindel 23 berührt wird, wenn der Antrieb in der entgegengesetzten Endstellung ist, in der also der Boden 13 des Vorratsbunkers 11 seine höchste Stellung einnimmt.

Aus Gründen der vereinfachten Darstellung ist in Fig. 1 das Gewinde und die Verzahnung der Gewindehülsen 23 nicht dargestellt. Die Wirkungsweise der Vorrichtung der Fig. 1 ist so, daß ein Antrieb des Elektromotors 24 zu einer Drehung der Gewindehülsen 23 führt, die sich daher durch die Gewindebuchsen 22 hindurchschrauben und nach oben gelangen. Bei dieser Drehbewegung werden die Gewindespindeln 20 aus ihnen herausgeschraubt, wobei sich also zwei Axialbewegungen ad dieren. Die maximale Verschiebung wird also durch die Summe der Längen der Gewindehülse 23 und der Gewindespindel 20 bestimmt.

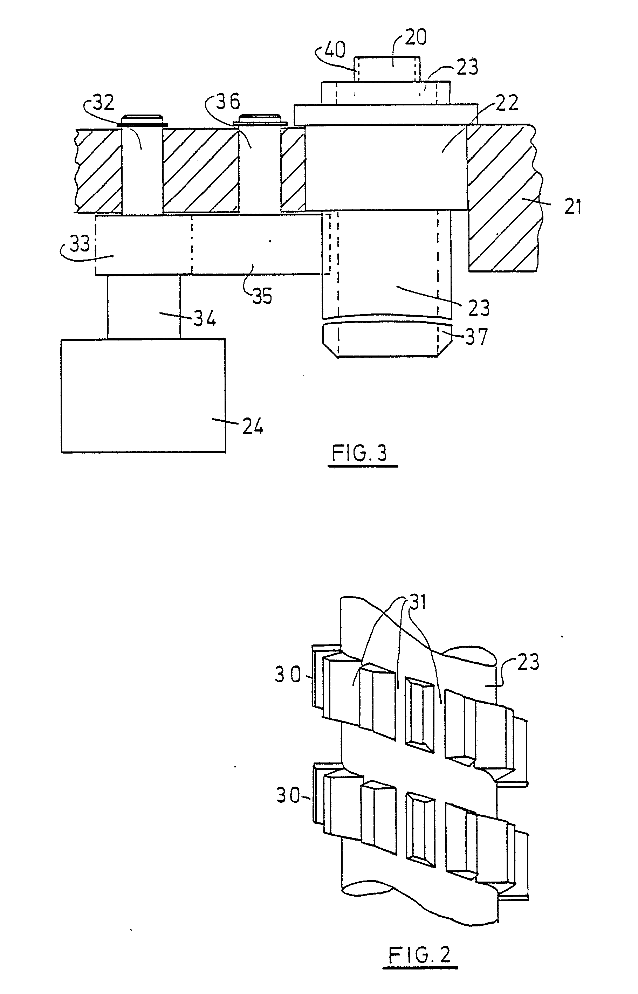

Fig. 2 zeigt nun perspektivisch einen Ausschnitt aus einer Gewindehülse 23. Dargestellt sind zwei Gewindewindungen 30, die ein Trapezgewinde darstellen sollen. Es handelt sich offensichtlich um ein Linksgewinde. In dieses Gewinde ist nun eine Vielzahl von in Längsrichtung der Gewindehülse 23 verlaufenden Nuten 31 eingebracht, die derart geformt sind, daß sich in einer Stirnansicht der Gewindehülse der Fig. 2 die Form eines Zahnrades ergibt. Ein ortsfest angeordnetes Zahnrad, das mit der Gewindehülse 23 kämmt, kann also an jeder beliebigen axialen Stelle mit der Gewindehülse 23 kämmen.

Fig. 3 zeigt nun vergrößert und vereinfacht den Antrieb der Gewindehülse 23. In dem Bereich der Basisplatte 21 radial innerhalb der Gewindebuchsen 22 weist diese eine verringerte Plattendicke auf. In der Mitte der Basisplatte 21 ist mit Hilfe eines Lagerzapfens 32 ein mittleres Zahnrad 33 gelagert. Dieses Zahnrad 33 steht über nur eine schematisch dargestellte Antriebsverbindung 34, die ebenfalls eine Kupplung enthalten kann, mit dem Elektromotor 24 in Verbindung. Der Elektromotor 24 treibt also das zentrale Zahnrad 33 an. Dieses kämmt mit einem Zwischenritzel 35, das auf einem zum Lagerzapfen 32 parallelen Lagerzapfen 36 gelagert ist. Das Zwischenritzel 35 greift nun in die Verzahnung der Gewindehülse 23 ein. Ein Drehen des Elektromotors führt daher zu einer Drehung der Gewindehülse 23, und deren Drehung führt zu ihrer eigenen gleichzeitigen Längsverschiebung aufgrund des Eingreifens der Gewindehülse 23 in das Innengewinde der Gewindebuchse 22.

Die Gewindehülse 23 weist nun ebenfalls ein Innengewinde auf, und zwar ein Rechtsgewinde. Die Verdrehung der Gewindehülse 23 allein führt zu einer Axialverschiebung der Gewindespindel 20, da diese in das Innengewinde der Gewindehülse 23 eingreift und sich selbst nicht drehen kann. Wird nun die Gewindehülse 23 bei ihrer eigenen Drehung nun noch axial verschoben, so addieren sich die beiden Axialverschiebungen.

Wenn das äußere Linksgewinde der Gewindehülse 23 und das innere Gewinde der Gewindehülse 23 die gleiche Steigung aufweisen und beide Elemente gleich lang sind, so wird die Ausgangsstellung dadurch definiert, daß die Oberkante von Gewindehülse 23, Gewindespindel 20 und Gewindebuchse 22 in etwa miteinander übereinstimmen. Natürlich ragt die Gewindespindel 20 in dem Bereich, in dem sie in den Ansatz 16 eingreift, etwas darüber hinaus. Erfolgt nun der Antrieb, so ist die maximale Stellung dann erreicht, wenn die Gewindehülse 23 fast ganz aus der Gewindebuchse 22 nach oben herausragt. In diesem Zustand ist aber auch die Gewindespindel 20 fast ganz aus der Gewindehülse 23 herausgeschraubt.

Aufgrund der bei Fig. 1 zu sehenden Anordnung von zwei Gewindespindeln 20 und zwei Gewindehülsen 23 bildet der Antrieb gleichzeitig eine Führung für den Boden 13 des Vorratsbunkers. Die Erfindung schafft also einen Antrieb, der bei geringem Platzbedarf einen großen Hub ermöglicht und gleichzeitig die Führung bildet. Da der gesamte Antrieb und die Führung unterhalb des Bodens 13 des Vorratsbunkers 11 angeordnet sind, ist die Vorrichtung darüber hinaus außerordentlich zuverlässig.

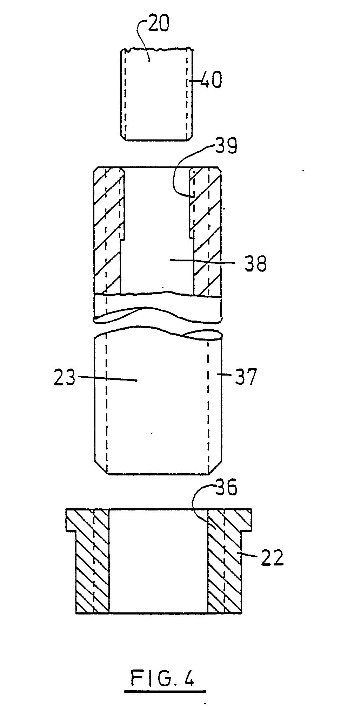

Fig. 4 zeigt nochmals die Einzelteile des Vorschubantriebs, mit der Gewindebuchse 22, die an ihrer Innenseite das Linksgewinde 36 aufweist. In die Gewindebuchse 22, die ihrerseits in der Basisplatte 21 drehfest eingesetzt wird, wird die Gewindehülse 23 eingeschraubt, die an ihrer Außenseite das dem Innengewinde 36 entsprechende Linksgewinde 37 aufweist. Die Form des Gewindes 37 ist in Fig. 2 dargestellt. Die Gewindehülse 23 enthält nun eine Innenbohrung 38, die mindestens im Bereich ihres oberen Endes ebenfalls mit einem Innengewinde 39 versehen ist. Dieses Innengewinde ist ein Rechtsgewinde. Es reicht aus, das Innengewinde 39 im Bereich desjenigen Endes der Gewindehülse 23 anzuordnen, das bei vollständig ausgefahrenem Antrieb dasjenige Ende ist, in dem das Ende der Gewindespindel 20 noch einsitzt. Die Gewindespindel 20 weist ein Außengewinde 40 auf, das dem Innengewinde 39 der Gewindehülse 23 entspricht. Aus der in Fig. 4 dargestellten Stellung werden die Einzelteile zusammengefügt, bis sie die gegenseitige Anordnung aufweisen, die in Fig. 1 dargestellt ist.

## Ansprüche

1. Vorrichtung zum Sortieren und Bereitstellen von Einzelteilen, mit einem zentral angeordneten Vorratsbunker (11) zur Aufnahme der zu sortierenden Teile, dessen Boden (13) durch einen Hubantrieb anhebbar ist, dadurch gekennzeichnet, daß an der Unterseite des Bodens (13) mindestens eine Gewindespindel (20) drehfest befestigt ist, die in eine mit einem Innengewinde (39) versehene Gewindehülse (23) eingreift, die an ihrer Außenseite ein Gewinde (37) umgekehrter Drehrichtung aufweist und in ein ortsfest angeordnetes Gewinde (36) eingreift, wobei der Antrieb die Gewindehülse (23) drehantreibt.

2. Vorrichtung nach Anspruch 1, dadurch gekennzeichnet, daß die Gewindehülse (23) über im wesentlichen ihre gesamte Länge mit Längsnuten (31) zur Bildung eines zahnradförmigen Querschnitts versehen ist.

3. Vorrichtung nach Anspruch 1 oder 2, dadurch gekennzeichnet, daß der Antriebsmotor (24) mit einem Zahnrad mit der Außenseite der Gewindehülse (23) kämmt.

4. Vorrichung nach einem der vorhergehenden Ansprüche, dadurch gekennzeichnet, daß das Gewinde (36), in das die Gewindehülse (23) eingreift, in einer Basisplatte (21) der Vorrichtung gebildet ist.

5. Vorrichtung nach einem der vorhergehenden Ansprüche, dadurch gekennzeichnet, daß das Gewinde (36), in das die Gewindehülse (23) eingreift, in einer eingesetzten bzw. einsetzbaren Gewindebuchse (22) angeordnet ist.

6. Vorrichtung nach einem der vorhergehenden Ansprüche, dadurch gekennzeichnet, daß der Antrieb in beiden Endstellungen durch einen Endschalter (27, 28) abschaltbar bzw. umschaltbar ausgebildet ist.

7. Vorrichtung nach Anspruch 6, dadurch gekennzeichnet, daß eine Gewindehülse (23) den Endschalter (27, 28) betätigt.

8. Vorrichtung nach Anspruch 6 oder 7, dadurch gekennzeichnet, daß für jede Endstellung ein eigener Endschalter (27, 28) vorgesehen ist.

9. Vorrichtung nach einem der vorhergehenden Ansprüche, dadurch gekennzeichnet, daß das Gewinde (37) an der Außenseite und das Gewinde (39) an der Innenseite der Gewindehülse (23) gleiche Steigung aufweisen.

10. Vorrichtung nach einem der vorhergehenden Ansprüche, dadurch gekennzeichnet, daß mindestens zwei vorzugsweise gleichmäßig über einen Umfang verteilte Gewindespindeln (20) angeordnet sind.

11. Vorrichtung nach einem der vorhergehenden Ansprüche, dadurch gekennzeichnet, daß der Antrieb von einem vorzugsweise zentrisch angeordneten Zahnrad (33) über ein Zwischenritzel (35) für jede Gewindehülse (23) erfolgt.

12. Vorrichtung nach einem der vorhergehenden Ansprüche, dadurch gekennzeichnet, daß der Antrieb an der Unterseite der Basisplatte (21) angeordnet ist und die Zahnräder bzw. Ritzel (33, 35) an der Basisplatte (21) gelagert sind.

13. Vorrichtung nach einem der vorhergehenden Ansprüche, dadurch gekennzeichnet, daß die Gewindehülse (23) und die Gewindespindel (20) etwa die gleiche Länge aufweisen.

FIG. 1

FIG. 3

FIG. 2

FIG. 4